# EUROPÄISCHE PATENTANMELDUNG

(11) **EP 1 344 564 A2**
(43) Veröffentlichungstag der Anmeldung: **17.09.2003**
(21) Anmeldenummer: 03004282.4
(22) Anmeldetag: 27.02.2003
(51) Int. Cl.: B01J 20/02, B01J 20/08, B01J 20/28

(54) **Mischungen aus Adsorbermaterialien**

(30) Priorität: 12.03.2002 DE 10210786
(71) Anmelder: BAYER AG, 51368 Leverkusen (DE)
(72) Erfinder: Schlegel, Andreas, Dr., 47800 Krefeld (DE)

(57) **Zusammenfassung**

Die vorliegende Erfindung betrifft Mischungen aus verschiedenen Adsorptionsmaterialien, deren Adsorptionseigenschaften sich in der Mischung ergänzen.

## Beschreibung

Die vorliegende Erfindung betrifft Mischungen aus verschiedenen Adsorptionsmaterialien, deren Adsorptionseigenschaften sich in der Mischung ergänzen.

Kontakt- und Adsorber-Granulate, auch solche auf Basis von Eisenoxiden und/oder Eisenoxihydroxiden, sind bereits beschrieben worden. Sie werden überwiegend in kontinuierlichen Verfahren eingesetzt, wobei sie sich üblicherweise in turm- bzw. kolonnenartigen Apparaten befinden, die von dem zu behandelnden Medium durchströmt werden, und an der äußeren und inneren Oberfläche der Granulate finden die chemischen bzw. physikalischen Reaktions- bzw. Adsorptionsprozesse statt.

Die strömenden Medien üben Kräfte auf die Granulate aus, die zur Abrasion und/oder zu einer Bewegung bis hin zu heftiger Agitation der Granulate führen können. Dadurch stoßen die Granulate aneinander, und infolgedessen entsteht unerwünschter Abrieb. Dieser führt zu Verlust von Kontakt- bzw. Adsorbermaterial und Verunreinigung des zu behandelnden Mediums.

Eisenoxid und -hydroxidhaltige Adsorptionsmittel/Reaktionsmittel sind z.B. im Bereich der Wasserreinigung oder Gasreinigung vorteilhaft einsetzbar. Bei der Wasserreinigung wird dieses Mittel in horizontal oder vertikal durchströmten Filtern bzw. Adsorberkolonnen oder durch Zugabe zu dem zu behandelnden Wasser für die Abscheidung von gelösten, suspendierten oder emulgierten organischen oder anorganischen Phosphor-, Arsen-, Antimon-, Schwefel-, Selen-, Tellur-, Beryllium- sowie Cyano- und Schwermetallverbindungen aus beispielsweise Trinkwasser, Brauchwasser, industriellem, kommunalem Abwasser, Mineral-, Weih- und Heilwasser sowie Gartenteich- und Agrarwasser eingesetzt. Möglich ist auch der Einsatz in sogenannten reaktiven Wänden zur Abscheidung der genannten Schadstoffe aus Grund- und Sickerwasserleitern von kontaminierten Standorten (Deponien).

Bei der Gasreinigung wird das Mittel in Adsorbern für die Bindung unerwünschter Bestandteile wie Schwefelwasserstoff, Mercaptanen und Blausäure, sowie sonstiger Phosphor-, Arsen-, Antimon-, Schwefel-, Selen-, Tellur-, sowie Cyano- und Schwermetallverbindungen in Abgasen eingesetzt. Es ist auch möglich, Gase wie HF, HCl, H₂S, SOₓ, NOₓ zu adsorbieren.

Möglich ist auch die Entfernung von Phosphor-, Arsen-, Antimon-, Selen-, Tellur-, sowie Cyano- und Schwermetallverbindungen aus Altölen und sonstigen kontaminierten organischen Lösungsmitteln.

Kontakt- und Adsorber-Granulate auf Basis von Eisenoxiden und/oder Eisenoxihydroxiden werden auch zur Katalyse chemischer Reaktionen in der Gasphase oder in der flüssigen Phase eingesetzt.

Es sind auch verschiedenartige Verfahren bekannt, um mit Hilfe von Adsorptionsmitteln die Spuren- und Schadstoffe aus wässrigen Systemen zu entfernen.

So wird in der DE-A 3 120 891 ein Verfahren beschrieben, bei welchem für die Abtrennung vornehmlich von Phosphaten aus Oberflächenwasser eine Filtration über Aktivtonerde mit einer Körnung von 1 bis 3 mm erfolgt.

Zum Entfernen von Schadstoffen aus Wasser beschreibt die DE-A 3 800 873 ein Adsorptionsmittel auf der Basis von porösen Materialien wie zum Beispiel hydrophobierter Kreide mit feiner bis mittlerer Körnung.

In der DE-A 3 703 169 wird ein Verfahren zur Herstellung eines granulierten Filterstoffes zum Aufbereiten von Naturwasser offenbart. Das Adsorbens wird durch Granulierung einer wässrigen Suspension von Kaolin unter Zugabe von pulverförmigem Dolomit in einer Wirbelschicht hergestellt. Anschließend werden die Granalien bei 900 bis 950°C gebrannt.

Aus der DE-A 40 34 417 ist ein Verfahren zur Herstellung und Verwendung von hochreaktiven Reagenzien für die Abgas- und Abwasserreinigung bekannt. Beschrieben werden hier Gemische aus Ca(OH)₂ mit Zusätzen von Tonen, Steinmehlen, Flugstaub und Flugaschen, die porös hergestellt werden und eine Oberfläche von ca. 200 m²/g besitzen.

In der DE-A 4 214 487 werden ein Verfahren und ein Reaktor zum Entfernen von Verunreinigungen aus Wasser beschrieben. Ein trichterförmiger Reaktor, in dem als Sorbens für Wasserverunreinigungen fein verteiltes Eisenhydroxid in flockiger Form eingesetzt wird, wird horizontal durchströmt. Nachteilig bei diesem Verfahren ist der Einsatz des flockenförmigen Eisenhydroxids, der aufgrund der geringen Dichteunterschiede zwischen Wasser und Eisenhydroxid dazu führt, dass ein derartiger Reaktor nur mit sehr geringen Strömungsgeschwindigkeiten betrieben werden kann und die Gefahr besteht, dass das Sorbens, gegebenenfalls bereits mit Schadstoffen beladen, gemeinsam mit dem Wasser aus dem Reaktor ausgetragen wird.

In JP-A 55 132 633 wird granulierter Rotschlamm als Nebenprodukt der Aluminiumproduktion als Adsorbens für Arsen beschrieben. Dieses setzt sich aus Fe₂O₃, Al₂O₃ und SiO₂ zusammen. Über die Stabilität der Granulate und über das Granulationsverfahren wird hierin nicht berichtet.

In DE-A 19 826 186 wird ein Verfahren zur Herstellung eines Eisenhydroxid enthaltenden Adsorptionsmittels beschrieben. Eine wässrige Polymer-Dispersion wird in Eisenhydroxid in in Wasser dispergierbarer Form eingemischt und anschließend getrocknet. Dadurch erhält man ein Material, bei welchem das Eisenhydroxid fest in das Polymer eingebettet ist und das eine hohe Bindekapazität für die üblicherweise in Abwässern oder Abgasen enthaltenen Schadstoffe aufweisen soll.

In den Schriften DE-A 1 0047 997 entspr. PCT/01/10926, DE-A 10 047 996 bzw. PCT/01/10513 sind Adsorber-Granulate auf Basis von Eisenoxiden oder Eisenoxihydroxiden beschrieben, die sich u. a. zur Entfernung von Arsen-Ionen und anderen Schadstoffen aus Trinkwasser erfolgreich einsetzen lassen.

DE-A 10 115 414 bzw. PCT/01/10634 beschreibt z. B. Granulate auf Eisenoxidbasis und/oder Eisenoxihydroxiden, die Al-, Ti- und/oder Mg-Oxide als Binder enthalten. DE-A 10 047 996 bzw. PCT/01/10513 enthalten das Eisenoxid bzw. Eisenoxihydroxid in einer Fe(OH)₃-Matrix eingebettet. Die Granulate erhalten dadurch eine außerordentlich große Stabilität ohne die Arsenadsorption zu beeinträchtigen.

In DE-A 1 0047 997 bzw. PCT/01/10926 sind Granulate aus fein- bzw. nanoteiligen Eisenoxiden bzw. Eisenhydroxiden mit hoher spezifischer Oberfläche beschrieben, die neben einer hohen Adsorptionskapazität gegenüber Arsen- und Schwermetallionen eine hohe Festigkeit und Abriebsstabilität bei deren Einsatz im Festbett besitzen.

DE-A 10 129 307 bzw. PCT/01/10930 beschreibt verschiedene Adsorptionsbehälter, die mit diesen vorgenannten Granulaten befüllt werden können und zur Schadstoffentfernung in der Wasseraufbereitung dienen können.

In der DE-A 4 320 003 wird ein Verfahren zum Entfernen von gelöstem Arsen aus Grundwasser mittels kolloidem oder granuliertem Eisenhydroxid beschrieben. Für die Verwendung von feinen, suspendierten Eisen(III)hydroxid-Produkten wird hier empfohlen, die Eisenhydroxid-Suspension in Festbettfilter, die mit gekörntem Material oder anderen Trägern mit hoher äußerer oder innerer Porosität gefüllt sind, einzubringen. Dieses Verfahren bringt den Nachteil mit sich, dass, bezogen auf das Adsorbens "Substrat + Eisenhydroxid", nur geringe spezifische Beladungskapazitäten erreichbar sind. Außerdem besteht nur eine schwache Bindung zwischen Substrat und Eisenhydroxid, so dass bei einer anschließenden Behandlung mit arsenhaltigem Wasser die Gefahr des Austrags von Eisenhydroxid bzw. Eisenarsenat besteht. In dieser Druckschrift wird weiterhin der Einsatz von granuliertem Eisenhydroxid als Adsorbermaterial für einen Festbettreaktor genannt, das durch Gefriertrocknung hergestellt wird.

Auch der Einsatz von Granulaten, die man durch Kompaktieren von z.B. pulverförmigem Eisenoxid durch Anwendung hoher Linienkräfte erzeugen kann, wurde bereits erwogen. Derartige Granulate sind bereits beschrieben worden, um Flüssigbeton homogen anzufärben. Die Anwendung hoher Linienkräfte beim Kompaktieren ist in hohem Maße energie- und kostenaufwendig und die Stabilität der Kompaktate ist bei längerem Einsatz in Adsorbern ungenügend. Daher kommen derartige für den Einsatz in z.B. Adsorbern, insbesondere kontinuierlich betriebenen, bei der Reinigung von Wasser nur bedingt in Betracht. Insbesondere bei der Wartung bzw. Reinigung der Adsorberanlagen durch Rückspülung (s. unten) verlieren derartige Granulate durch die damit verbundene Agitation derselben große Mengen Substanz. Das Rückspül-Abwasser ist durch den Abrieb stark eingetrübt. Dies ist aus mehreren Gründen nicht akzeptabel: Zunächst einmal geht Adsorbermaterial verloren, welches nach einer längen Standzeit hoch mit Verunreinigungen beladen und daher toxikologisch bedenklich ist. Dann wird der Abwasserstrom mit dem Abrieb belastet, der sedimentieren kann und so zur Beeinträchtigung der Rohrleitungssysteme führt und letztlich die Kläranlage physikalisch und toxikologisch unerwünscht belastet, um nur einige Gründe zu nennen.

Zur Wasseraufbereitung werden bevorzugt kontinuierlich betriebene Adsorber eingesetzt, die häufig in Gruppen parallel angeordnet betrieben werden. Zu Spitzenverbrauchszeiten werden dann die vorhandenen Adsorber parallel betrieben, um die Strömungsgeschwindigkeit nicht über das auslegungsbedingte Maximum hinaus ansteigen zu lassen. Während Zeiten niedrigeren Wasserverbrauchs werden einzelne Adsorber aus dem Betrieb genommen und können währenddessen beispielsweise gewartet werden, wobei das Adsorbermaterial besonderen Belastungen ausgesetzt ist, wie weiter unten näher ausgeführt wird.

Bei der Wasseraufbereitung kommen bevorzugt kontinuierlich betriebene Adsorber zum Einsatz, die häufig in Gruppen parallel angeordnet betrieben werden. Zur Entfernung von organischen Schadstoffen aus Wasser werden derartige Adsorber beispielsweise mit Aktivkohle in granulierter oder pulvriger Form beschickt.

Ionenaustauscherharze oder Zeolithe werden u. a. zur Wasserenthärtung und zur Entfernung zahlreicher Kationen und Anionen eingesetzt.

Aktivtonerde in verschiedenen Korngrößen dient hauptsächlich zur Entfernung von Fluoriden und Arsenverbindungen.

Vielfach steht man nun vor dem Problem, mehrere Inhaltsstoffe unterschiedlicher Natur gleichzeitig aus ein und derselben Wasserquelle entfernen zu müssen. Normalerweise geschieht dies nacheinander durch mehrere, hintereinandergeschaltete Adsorptionskolonnen.

Der vorliegenden Erfindung lag daher die Aufgabe zugrunde, hochreaktive Reagenzien und Zusammensetzungen zur Reinigung von Gewässern aus Trink-, Brauch-, Mineral-, Gartenteich-, Agrar-, Weih- und Heilwasser und/oder Gasen, welche Schadstoffe enthalten, auf der Basis insbesondere trockener, pulverförmiger oder granulierter Gemische von Eisenoxiden, Eisen(oxi)hydroxiden und anderer Adsorptions-/Reaktionsmittel gegebenenfalls mit Zusatzstoffen wie z. B. Bindemittel die sich durch hohe Reinigungsleistung und Deponiesicherheit der Reaktionsprodukte auszeichnen, zu mischen, sowie Verfahren zu ihrer Herstellung und ihre Verwendung anzugeben. Das Gemisch der Adsorptionsmittel/Reaktionsmittel sollte ein hohes kombiniertes Bindevermögen und dadurch eine hohe Entfernung der in Flüssigkeiten und Gasen enthaltenen oder gelösten Schadstoffe gewährleisten, welche aber zugleich den mechanischen und hydraulischen Beanspruchungen in den Adsorbergehäusen oder Anlagen standhalten und zusätzlich zur Sicherheit durch die Filtrationsleistung eingebauter Filter den Austrag suspendierter Verunreinigungen oder abgeriebener, möglicherweise mit Schadstoffen beladenen Adsorberteilen verhindern.

Die erfindungsgemäßen Kontakte bzw. Adsorptionsmittel/Reaktionsmittel, deren Bereitstellung, deren Verwendung sowie mit diesen beschickte Apparate lösen diese komplexe Aufgabe. Die Erfindung betrifft fernerhin ein Verfahren zur Darstellung der Adsorber zur Befüllung in den erfindungsgemäßen Filtrationseinheiten.

Überraschenderweise wurde nun gefunden, dass sich die Mischungen verschiedener Adsorptionsmittel in körniger oder pulvriger Form in ihren Adsorptionskapazitäten ergänzen und sich nicht gegenseitig behindern, wie man vielleicht vermuten könnte.

Zum Beispiel lassen sich Aktivkohle, Aktivtonerde, granuliertes Eisen(oxi)hydroxid oder Ionenaustauscherharze miteinander in beinahe jedem Verhältnis mischen.

Es können auch andere Substanzen beigemischt werden, die eine wasserreinigende Wirkung besitzen. Von Manganoxid ist beispielsweise die oxidierende Wirkung auf Arsen(III)-verbindungen bekannt: W. Driehaus, Fortschr.-Ber. VDI, 15; 133, VDI Düsseldorf, 1994. Die Beimischung dieser Substanz hat z. B. den Vorteil, dass auch As(III)-Verbindungen neben As(V) entfernt werden können.

Es können auch Kupfer- und /oder Zink- und/oder Silberverbindungen beigemischt werden. Es ist bekannt, dass diese Verbindungen z. B. in Wasser eine biozide Wirkung auf schädliche Mikroorganismen haben können.

Das am besten geeignete Mischungsverhältnis der Adsorbentien kann der Anwender je nach vorliegender Wasserqualität unter Berücksichtigung der erforderlichen Reinheitsanforderungen selbst wählen. Die auf diese Weise hergestellten Mischungen können den jeweiligen Bedürfnissen der Gewässerreinigung angepasst werden.

Die Mischungen können als Zusammenstellung lose verkauft werden, oder in sog. Adsorbergehäusen gepackt (und dann verkauft) werden.

Die Mischungen der einzelnen Adsorptionsmedien können hergestellt werden, indem man die einzelnen Adsorber jeweils in ihrer Pulver-, Granulat-, oder sonstigen käuflichen Darreichungsform oder Mischungen davon, mit oder ohne Bindemittel und/oder wasser, vermischt, über eine Strangpresse, einen Extruder oder sonstigen Pelletier- und Granuliervorrichtungen zu Körpern, Strängen bzw. Granulaten formt, oder über eine Pressvorrichtung mit oder ohne Bindemittel zu Formkörpem in geeigneter Größe verpresst. Die Mischungen aus den einzelnen Komponenten können auch hergestellt werden, indem man z. B. während des Herstellungsprozesses andere Adsorptionsmedien bei- oder untermischt. Zum Beispiel kann man während der Darstellung von granuliertem Eisenoxid/(oxi)hydroxid, wie sie z. B. in DE-A 10 047 997 entspr. PCT/01/10926 beschrieben ist, zur Suspension, zur Filterpaste, während der Pastenformung oder nach der Granulation Adsorbermaterialien in Pulver- oder Granulatform so beimischt, dass sich ein stabiles Verbundmaterial bildet, die bei ihrem Einsatz in Adsorberkolonnen sehr gut zusammenhalten und die Adsorptionskapazität jeder einzelnen Komponente erhalten bleiben.

Die erfindungsgemäßen Gemische können in einen von einer zu behandelnden Flüssigkeit durchströmbaren Adsorbtionsbehälter, insbesondere einen Filteradsorptionsbehälter, der gefüllt ist mit granulierten oder pulverisierten, festen, wasserunlöslichen Adsorptionsmedien, zur Entfernung von organischen, anorganischen oder biologischen Spuren- und Schadstoffen aus Trinkwasser eingebettet werden. Die Vorrichtung kann z. B. im Haushalt an die Sanitär- und Trinkwasserversorgung angeschlossen werden.

Besonders bevorzugt werden die erfindungsgemäßen Granulate bei der Reinigung von Flüssigkeiten, insbesondere zur Entfernung von Schwermetallen, eingesetzt. Eine in diesem technischen Gebiet bevorzugte Anwendung ist die Dekontamination von Wasser, insbesondere von Trinkwasser. In jüngster Zeit wird der Entfernung von Arsen aus Trinkwasser besondere Aufmerksamkeit gewidmet. Die erfindungsgemäßen Granulate eignen sich hierzu hervorragend, da selbst die niedrigen von der US- Behörde EPA festgesetzten Grenzwerte durch die Verwendung der erfindungsgemäßen Granulate nicht nur eingehalten, sondern sogar unterschritten werden können.

Vielfach steht man vor dem Problem, vor allem in Regionen, in denen Brunnen-Leitungs- oder allgemein Trinkwasser mit Arsen- oder sonstigen Schwermetallen belastet ist, keine geeignete Trinkwasseraufbereitungsanlage in der Nähe oder kein geeignetes Aggregat zur Hand zu haben, die die Schadstoffe kontinuierlich entfernen würden.

Filterkartuschen, zur Reinigung von Flüssigkeiten, vorzugsweise verunreinigtem Wasser, die auch ein Adsorptionsmedium enthalten können, sind in verschiedenen Ausführungen bekannt.

Zur Abtrennung von Feststoffen aus Gewässern sind z. B. Membranfilterkerzen in geeigneten Gehäusen im Einsatz.

Von der Firma Brita Wasser-Filter-Systeme GmbH sind Kartuschen und Vorrichtungen zum Aufbereiten von Flüssigkeiten bekannt (DE-A 19 905 601; DE-A 19915829; DE-A 19 814 008, DE-A 19 615 102, DE-A 4 304 536, US-A 6,099,728). Diese Vorrichtungen eignen sich gut zur ganz- oder teilweisen Entsalzung von Trinkwasser in Haushaltskannen unmittelbar vor dem Gebrauch des Trinkwassers.

Aus der US-A 4,064,876 ist eine als Filterpatrone ausgebildete Filtrationseinheit bekannt, die zwischen einer Polyesterurethan-Schaumstoffschicht und einer Glasfaserschicht eine Schüttung von Aktivkohlepartikeln besitzt.

In DE-A 19 816 871 (Sartorius) ist eine Filtrationseinheit zur Entfernung von Schadstoffen aus Fluiden beschrieben.

In RU-A 2 027 676 ist ein Patronenfilter mit Sorptionsmittel für die Trinkwasserreinigung mit Anschluss an den Wasserhahn in der Wohnung beschrieben.

In HU-A 00 209 500 ist eine Filterkartusche zur Entfernung von radioaktivem Material und Schwermetallen aus Wasser beschrieben, die mit einer Mischung aus Ionenaustauschermaterial, Aktivkohle, Filtersand, Zeolithen, Aluminiumoxid und Rotschlamm gefüllt ist.

Meistens sind diese Adsorberkartuschen mit Aktivkohle oder mit lonenaustauscherharzen befüllt. Aktivkohle hat jedoch den Nachteil, dass Arsen- und Schwermetallsalze, wie sie in wässrigen Systemen vorkommen, wegen der niedrigen Adsorptionskapazität der Aktivkohle nicht in ausreichendem Umfang entfernt werden, was sich auf die Standzeit der Kartuschen auswirkt.

Diese Aufgabe wird durch eine Filtrationseinheit gelöst, die aus einem Gehäuse aus Kunststoff, Holz, Glas, Keramik, Metall oder einem Verbundwerkstoff besteht, welches mit Einlass- und Auslassöffnungen versehen ist. Beispielhafte einfache Ausführungsformen sind in DE-A 19 816 871 ausführlich beschrieben. Eine verbesserte Ausführungsform eines Adsorbertanks ist in DE-A 10 129 307 bzw. PCT/01/10930 beschrieben. Prinzipiell sind natürlich weitere Ausführungsformen und Designs möglich, die dem beschriebenen Aufbauten ähnlich sind und die nach den beschriebenen Weisen arbeiten, d. h. eine Einlass- und Auslassöffnung für Gewässer und Eisenoxid- und/oder Eisen(oxi)hydroxid- als Adsorbermedien enthalten.

Der Gehäuseraum kann dabei vollständig oder teilweise mit den Adsorberpartikeln gefüllt sein. Durch die Füllung des Gehäuseraumes mit einer Schüttung der Adsorberpartikel, die zwischen 1 und 99 % des Gehäusevolumens einnimmt, ist ein hoher Durchfluss des zu reinigenden Fluids gewährleistet, da durch die Stabilität der Adsorbergranulate der zuströmenden Flüssigkeit ein geringer Widerstand entgegengesetzt wird.

In diesen Schriften ist auch ein Filterbeutel beschrieben, der, gefüllt mit Adsorber-Granulaten, einem zu reinigenden Gewässer zugeführt werden kann, um die darin enthaltenen Schadstoffe durch Adsorption zu entfernen.

Filterbeutel und Extraktionshülsen kennt man z. B. in vielfältigen Formen und Ausführungen zur Bereitung von heißen Aufgussgetränken, insbesondere Tee. DE-C 839 405 beschreibt z. B. einen solchen Faltbeutel, wie er zur Bereitung von Tee und dergleichen verwendet wird. Durch eine spezielle Falttechnik, durch die ein Doppelkammersystem gebildet wird, ist eine intensive Durchmischung des Eluens mit der zu extrahierenden Substanz gewährleistet.

Umgekehrt lassen sich aber auch die erfindungsgemäßen Adsorbergemische in pulverisierter, fein- oder grobgranulierter Form in semipermeable Beutel oder Taschen mit Filterwirkung (wie z. B. oben beschriebener Faltbeutel) einbetten, und diese Packungen dem zu reinigenden Gewässer zuführen um dadurch nach einer gewissen Kontaktzeit die Schadstoffe durch Adsorption am Adsorbermaterial aus dem Gewässer zu entfernen. Die Adsorbergemische halten einerseits den mechanischen und hydraulischen Beanspruchungen im Filterbeutel stand und andererseits wird durch die Filterleistung der Filtermembran ein Austreten von eventuell durch Abrieb entstehenden Feinanteiles des Adsorptionsmittels in das zu reinigende Gewässer verhindert.

Die verschiedenen Ausführungsformen der vorliegenden Erfindung haben gemeinsam, dass man Gemische aus verschiedenen Adsorbentien in fein-, grobgranulierter oder pulverisierter oder gepresster Form in Gehäusen mit Filterwirkung einbettet und die zu reinigende Flüssigkeit durch das Filtergehäuse durchströmen lässt oder die Filterpackung der zu reinigenden Flüssigkeit zuführt und somit eine Adsorption der Schadstoffe gewährleistet.

Zur Herstellung der erfindungsgemäßen Granulate wird auf DE-A 1 0047 997 entspr. PCT/01/10926, DE-A 10047996 bzw. PCT/01/10513, DE-A 10129307 bzw. PCT/01/10930 und DE-A 10 115 414 bzw. PCT/01/10634 sowie die in diesen Schriften zitierte Literatur verwiesen.

Mischungen der verschiedenen Adsorber können z.B. wie folgt hergestellt werde. Wie in Beispiel 1 beschrieben, wird eine Suspension von Eisen(oxi)hydroxiden hergestellt, und verschiedene Adsorbermaterialien in einem gewissen Verhältnis zugegeben, die Suspension wird filtriert und der Rückstand im wesentlichen salzfrei gewaschen. Der Filterkuchen, den man als Rückstand erhält, ist eine feste bis halbfeste Paste. Diese kann anschließend ganz oder teilweise entwässert werden, und das so erhaltene Material kann anschließend in die gewünschte Form und/oder Größe zerkleinert werden. Alternativ kann die Paste bzw. der Filterkuchen, gegebenenfalls nach einer Vortrocknung zur Erlangung eines dazu ausreichend festen Zustands, einer Formgebung und anschließenden (weiteren) Trocknung unter Erlangung eines stückigen Zustandes unterzogen werden. Die spätere Anwendung des Granulats bestimmt die bevorzugte Vorgehensweise bei seiner Herstellung und ist für den Fachmann auf dem jeweiligen Anwendungsgebiet durch einfache orientierende Vorversuche bestimmbar. Sowohl der unmittelbar getrocknete Filterkuchen als auch die getrockneten Formkörper können dann als Kontakt bzw. Adsorber eingesetzt werden.

Das eingesetzte feinteilige Eisenoxid und/oder Eisenoxihydroxid hat eine Teilchengröße von bis zu 500 nm, vorzugsweise bis zu 100 nm, besonders bevorzugt 4 bis 50 nm, und eine BET-Oberfläche von 50 bis 500 m²/g, bevorzugt von 80 bis 200 m²/g.

Alternativ dazu können die nach Beispiel 1 oder Beispiel 2 erhältlichen Produkte bzw. Mischungen anschließend beispielsweise durch Schroten oder Mahlen weiter zerkleinert werden.

Als andere Methode, Granulate zu erzeugen, hat sich die Granulierung einer halbfeuchten Paste bewährt. Dabei formt man Pellets bzw. Stränge aus einer halbfesten Paste z. B. Mittels eines einfachen Lochblechs, einer Walzenpresse oder eines Extruders und trocknet diese entweder gleich oder bringt diese Extrudate mittels eines Sphäronizers zusätzlich in eine Kugel- oder Granulatform. Die noch feuchten Kügelchen bzw. Granulate können im Nachhinein auf einen beliebigen Feuchtigkeitsgehalt nachgetrocknet werden. Damit die Granulate nicht zusammenbacken, empfiehlt sich ein Restfeuchtegehalt von < 50 %. Eine solche Kugelform kann für den Einsatz in Festbettadsorbern wegen der dadurch besseren Schüttung im Adsorberbehälter gegenüber geschroteten Granulaten oder Pellets in Strangform von Vorteil sein.

Generell ist es möglich, zur Verbesserung des Filtrationsverhaltens der Suspensionen übliche filtrationsverbessernde Maßnahmen anzuwenden wie sie z.B. in Solid-Liquid Filtration and Separation Technology, A. Rushton, A.S. Ward, R.G. Holdich, 2. Aufl. 2000, Wiley-VCH, Weinheim sowie Handbuch der Industriellen Fest/Flüssig-Filtration, H. Gasper, D. Öchsle, E. Pongratz, 2. Aufl. 2000, Wiley-VCH Weinheim beschrieben sind. So können den Suspensionen zum Beispiel Flockungsmittel zugesetzt werden.

Neben oder an Stelle der Eisenoxihydroxide können auch Eisencarbonate verwendet werden.

Die erfindungsgemäßen Produkte können einer Trocknung an Luft, und/oder im Vakuum, und/oder im Trockenschrank und/oder auf Bandtrocknern oder durch Sprühtrocknung, bevorzugt bei Temperaturen von -25 bis 250°C, besonders bevorzugt bei 60 bis 120°C, unterzogen werden.

Die erfindungsgemäßen Produkte haben vorzugsweise einen Restwassergehalt von weniger als 20 Gew.-%.

Es wurde gefunden, dass die so erhaltenen Stücke bzw. Granulate eine hohe Bindekapazität für in Gewässern, Flüssigkeiten oder Gasen enthaltene Schadstoffe besitzen und sie zudem eine ausreichend hohe Stabilität gegenüber durch strömende Medien hinsichtlich mechanischer oder hydraulischer Beanspruchung besitzen.

Insbesondere überrascht, dass sich feinteilige Eisenoxihydroxide bzw. Eisenoxide mit hohen spezifischen Oberflächen beim Mischen mit Adsorptionsmittel anderer Art und Zusatzstoffen nach dem Trocknen in sehr harte Agglomerate verfestigen, die ohne Zusatz von Bindemittel eine hohe mechanische Abriebsfestigkeit und eine hohe hydraulische Stabilität gegenüber dem Kontakt mit durchströmenden Wasser besitzen, und die ein hohes Bindevermögen für die in dem Wasser enthaltenen Schadund Spurenstoffe haben.

Zum erfindungsgemäßen Einsatz von feinteiligen Eisenoxihydroxiden eignen sich z.B. transparente Eisenoxihydroxidpigmente mit spezifischen Oberflächen von mehr als 80 m². Es können aber auch entsprechend feinteilige Eisenoxidpigmente eingesetzt werden, vorzugsweise Hämatite, Magnetite oder Maghämite

Die Herstellung von gelben feinteiligen Eisenoxihydroxidpigmenten (z.B. Goethit) im sauren oder alkalischen pH-Bereich, sogenannte saure bzw. alkalische Keime, ist Stand der Technik und in zahlreichen Patenten beschrieben.

Dadurch, dass Eisenoxihydroxide verschiedenster Phasen jeweils in Reinform oder in beliebiger Mischung durch die bekannten Fällungs- und Oxidationsreaktionen aus Eisen(II)- oder Eisen(III)-salzlösungen hergestellt werden, das entstandene Eisenoxihydroxide, gegebenenfalls nach einer Nachbehandlung und Beimischung anderer Adsorbermedien, aus der Suspension durch Filtration von der Salzlösung abgetrennt und weitgehend salzfrei, vorzugsweise bis zu einer Restleitfähigkeit von <5 mS/cm, gewaschen wird, der feste oder halbfeste Filterkuchen so wie er ist, oder gegebenenfalls nach einer mechanischen Formgebung, anschließend einer Trocknung unter Erlangung eines festen Zustandes unterzogen wird, erhält man ein mechanisch hochfestes Material, welches eine hohe Bindekapazität für die üblicherweise in Abwässern oder Abgasen enthaltenen Schadstoffe aufweist.

Die Trocknung erfolgt zweckmäßig bei Temperaturen bis zu 250°C. Auch eine Vakuum- oder Gefriertrocknung des Materials ist möglich. In jedem Falle sollte die Trocknungstemperatur jedoch so gewählt werden, dass keines der einzelnen Adsorptionsmedien seine eigenständige Adsorptionsfähigkeit verliert. Die Korngröße des Materials ist beliebig, sie liegt vorzugsweise zwischen 0,2 und 40 mm, besonders bevorzugt zwischen 0,2 und 20 mm. Diese kann erreicht werden durch mechanische Formgebung des halbfesten, pastösen Filterkuchens vor der Trocknung durch eine Granulier- oder Pelletieranlage oder in einer Strangpresse zu Formkörpern mit einer Größe im Bereich zwischen 0.2 und 20 mm und anschließender Trocknung an der Luft, auf einem Bandtrockner oder in einem Trockenschrank, und/oder durch mechanisches Zerkleinern auf die gewünschte Korngröße nach der Trocknung.

Gegenüber dem Stand der Technik handelt es sich bei den beschriebenen Produkten, dem Verfahren zur ihrer Herstellung und ihrer Verwendung um eine Verbesserung. Die erfindungsgemäßen Granulatgemische auf Basis feinteiliger Eisen(oxi)hydroxide und/oder -oxide können wesentlich platzsparender mit einer individuell an bestimmte Reinigungsbedürfnisse angepassten Adsorbermischungen in Adsorbersäulen eingesetzt werden und man benötigt nicht mehrere Säulen mit jeweils verschiedenen Medien. Sie können direkt als solche eingesetzt werden.

Auf eine separate Granulierung, wie sie beim Einsatz herkömmlicher Eisenoxihydroxiden in Form (rieselfähiger) Pulver erforderlich wäre, entweder unter Zuhilfenahme substanzfremder Bindmittel oder höchster Linienkräfte beim Kompaktieren, kann völlig verzichtet werden.

Erfindungsgemäß können die Suspensionen der feinteiligen Eisenoxihydroxide bzw. Eisenoxide auch mit gewöhnlichen pulverförmigen Eisenoxihydroxiden bzw. Eisenoxiden versetzt werden. Die jeweiligen Mengen werden durch die Eigenschaften dieser pulverförmigen Eisenoxihydroxide bzw. Eisenoxide und die an das erfindungsgemäße Produkt gestellten Anforderungen bezüglich seiner mechanischen Stabilität und Abriebfestigkeit bestimmt. Der Zusatz von pulverförmigen Pigmenten wird in der Regel zwar die mechanische Festigkeit der erfindungsgemäßen Produkte verringern, jedoch wird die Filtration der feinteiligen Suspensionen erleichtert. Der auf dem jeweiligen Anwendungsgebiet tätige Fachmann wird durch wenige orientierende Versuche das für seinen Anwendungszweck optimale Mischungsverhältnis ermitteln können.

Die Mischungen der Adsorptionsmittel können auch zusätzlich mit einer dem NaOH-Überschuss entsprechenden Menge an wässrigen Salzen von Fe³⁺, A1³⁺, Mg²⁺, Ti⁴⁺ oder Mischungen davon soweit versetzt werden, so dass ausreichend schwerlösliche Niederschläge von Fe(OH)₃, Al(OH)₃, Mg(OH)₂, TiO(OH)₂ bzw. Alterungs- und dehydratisierte Folgeprodukte derselben auf die suspendierten Eisenoxid- und/oder Eisen(oxi)hydroxidpartikel auffällen. Man kann auch in umgekehrter Weise auf die in Fe³⁺-, Al³⁺-, Mg²⁺-, Ti⁴⁺- Lösungen suspendierten Eisenoxid- bzw. Eisen(oxi)hydroxidpartikel durch Zugabe von Alkalien, wie z. B. NaOH, Ca(OH)₂, KOH, CaCO₃, Na₂CO₃, K₂CO₃, NH₄OH die schwerlöslichen Niederschläge Fe(OH)₃, Al(OH)₃, Mg(OH)₂, TiO(OH)₂ bzw. deren Alterungs- und Folgeprodukte auffällen. Das Aluminiumoxid bzw. Aluminium(oxi)hydroxid kann auch aus einer Aluminatsuspension (z. B. NaAlO₂) auf die Eisenoxid- und(oder Eisen(oxi)hydroxidpartikel aufgefällt werden.

Dazu können die Granulate in herkömmliche Adsorberapparaten eingesetzt werden, wie sie derzeit schon, z.B. mit Aktivkohle beschickt, zur Entfernung von Schadstoffen anderer Art in Gebrauch sind. Ein Batchbetrieb, beispielsweise in Zisternen oder ähnlichen Behältnissen, die gegebenenfalls mit Rührwerken ausgestattet sind, ist zwar auch möglich. Der Einsatz in kontinuierlich betriebenen Anlagen wie Durchflussadsorbern ist jedoch bevorzugt.

Durch die erfindungsgemäße Stabilität der Granulate und durch geeignete Packung der Adsorbergranulate ist der Materialabrieb minimiert.

Daher sind auch Wasseraufbereitungsanlagen bzw. Wasserwerke, in denen mit den erfindungsgemäßen Granulaten beschickte Apparate betrieben werden ebenso Gegenstand der vorliegenden Erfindung wie Verfahren zur Dekontamination von Wasser unter Verwendung derartiger Apparate sowie derartige Apparate selbst.

Die Bestimmung der spezifischen Oberfläche der erfindungsgemäßen Produkte nach BET erfolgt über das Trägergasverfahren (He:N₂=90:10) nach der Einpunkt-Methode, gemäß DIN 66131 (1993). Vor der Messung wird die Probe 1 h bei 140°C im trockenen Stickstoffstrom ausgeheizt.

Zur Messung der Adsorption von Arsen(III) und Arsen(V) werden in einer 5L PE-Flasche über einen bestimmten Zeitraum 3L einer wässrigen Lösung von NaAsO₂ oder Na₂HAsO₄ mit der jeweils angegebenen Konzentration von ca. 2-3 mg/L Arsen mit 3 g der zu untersuchenden Probe behandelt und dabei die Flasche auf rotierenden Walzen in Bewegung versetzt. Die Adsorptionsgeschwindigkeit von As-Ionen auf Eisenhydroxid über diesen bestimmten Zeitraum, z.B. eine Stunde, wird angegeben mit mg(As³⁺⁵⁺)/g(FeOOH)•h aus der Differenz zu den in Lösung verbleibenden As ^{3+/5+}-Ionen.

Die As- Gehalte des beladenen Eisenoxihydroxids bzw. der Lösungen bestimmt man über die Massenspektrometrie (ICP-MS) gemäß DIN 38406-29 (1999) oder über optische Emissionsspektroskopie (ICP-OES) gemäß EN-ISO 11885 (1998) mit jeweils induktiv gekoppeltem Plasma als Anregungseinheit.

Die Beurteilung der mechanischen und hydraulischen Abriebsfestigkeit erfolgte nach folgender Methode: 10 g des zu untersuchenden Granulats mit Korngrößen >0.1 mm wurden in einem 500 mL Erlenmeyerkolben mit 150 mL VE-Wasser versetzt und auf einer Schüttelmaschine LabShaker (Modell Kühner, Fa. Braun) über einen Zeitraum von 30 Minuten mit 250 Umdrehungen/Minute in Rotation versetzt. Anschließend wurde von der Suspension mittels eines Siebs der Anteil >0.1 mm isoliert, getrocknet und gewogen. Das Gewichtsverhältnis zwischen Auswaage und Einwaage bestimmt den Abriebswert in %.

Die Erfindung wird im Folgenden anhand von Beispielen näher erläutert. Die Beispiele sollen der Illustration des Verfahrens dienen und stellen keine Einschränkung dar.

### Beispiele

### Ausführungsbcispiel 1

Es wurden 3100 kg NaOH vorgelegt und mit kaltem Wasser auf 31 m³ verdünnt (als Lösung mit ca. 100 g/L). Die Temperatur dieser NaOH-Lösung betrug 24°C.

3800 kg FeS0₄ werden mit Wasser zu 36 m³ Lösung gelöst, auf 13-14°C abgekühlt und anschließend unter Rühren in 40 min zu der NaOH-Vorlage gepumpt. Die entstehende Suspension wurde dann unter Rühren mit 2500 m³/h Luft in 90 min oxidiert.

Anschließend gibt man 17,4 m³ einer FeSO₄-Lösung (100 g/L) in 150 L/min unter Begasung mit 1300 m³/h Luft unter Rühren zu.

Die Keimsuspension wurde auf einer Filterpresse bis zu einer Filtratleitfähigkeit < 1 mS/cm gewaschen, die Filterpaste durch ein Lochblech gedrückt und auf einem Bandtrockner bis zu einer Restfeuchte von < 20 Gew.-% getrocknet. Das so getrocknete Material wurde auf Korngrößen < 2 mm geschrotet. Der Feinanteil < 0.5 mm wurde über ein Sieb abgetrennt. Das so erhaltene Material hatte eine spezifische Oberfläche nach BET von 134 m²/g und bestand zu 100 % aus α-FeOOH. Der Abriebswert betrug nach 30 Minuten lediglich 4,0 Gew.-%.

Die Adsorptionsgeschwindigkeit bezüglich einer wässrigen Na₂HAsO₄-Lösung mit einer Ausgangskonzentration von 2.7 mg/L (As⁵⁺) betrug 0.7 mg(AS⁵⁺)/g(FeOOH)*h.

### Ausführungsbeispiel 2

Eine nach Beispiel 1 hergestellte Suspension von eisen(oxi)hydroxiden wird mit 10 Gew.-% Ionenaustauscher Lewatit® der Fa. Bayer AG, 20 Gew.-% Aktivkohle, 20 % aktiviertes Aluminiumoxid versetzt. Die Gewichtsprozente beziehen sich auf 100 % trockene Gesamtgranulatmenge. Die Suspension wird auf einer Filterpresse bis zu einer Filtratleitfähigkeit < 1 mS/cm gewaschen, die Filterpaste durch ein Lochblech gedrückt und auf einem Bandtrockner bis zu einer Restfeuchte von < 20 Gew.-% getrocknet. Das so getrocknete Material wurde auf Korngrößen < 2 mm geschrotet. Der Feinanteil < 0.5 mm wurde über ein Sieb abgetrennt. Das so erhaltene Material wurde direkt in einem Adsorbertank eingesetzt.

### Ausführungsbeispiel 3

Das nach Ausführungsbeispiel 1 hergestellte trockene Eisen(Oxi)hydroxid-Granulat wird mit 20 Gew.-% eines Kateionenaustauschers, 30 % einer granulierten Aktivkohle (Korngrößen zw. 0.5 und 2 mm), und 20 % granuliertem Aluminiumoxid versetzt und unter Einwirkung hoher Linienkräfte kompaktiert. Die so erhaltenen Kompaktate werden auf Korngrößen zwischen 0.5 und 2 mm geschrotet und in einem Adsorptionsbehälter zur Wasserreinigung eingesetzt.

### Ausführungsbeispiel 4

Nach Beispielen 1-3 dargestellte Adsorbergranulate, typischerweise zwischen 0.5 und 2 mm oder in zerkleinerter Form werden in einen Kontaktraum eingelagert. Die Filtrationseinheit weist einen Durchfluss für Luft als Fluid von 2000 mL pro Minute bei einer Druckdifferenz von 0.1 bar auf.

## Patentansprüche

1. Verfahren zur Herstellung von hochreaktiven Reagenzien zur Reinigung von Wasser, welches mit organischen, anorganischen oder biologischen Schadoder Inhaltsstoffen belastet ist, **dadurch gekennzeichnet, dass** Mischungen von verschiedenen Adsorbermedien eingesetzt werden.

2. Verfahren nach Anspruch 1, **dadurch gekennzeichnet, dass** die Adsorbermischung mindestens eines der folgenden Produkte als Hauptkomponente enthält:
(a) Feinteiliges Eisenoxid und/oder Eisenoxihydroxid, wobei das feinteilige Eisenoxid und/oder Eisenoxihydroxid eine BET-Oberfläche von 50 bis 500 m²/g, bevorzugt von 80 bis 200 m²/g, aufweist, die Agglomerate gegebenenfalls Eisenoxidpigmente mit Teilchengrößen oberhalb und BET-Oberflächen unterhalb der vorstehenden Grenzen enthalten können, wobei der Gehalt an diesen höchstens so hoch ist, dass die Festigkeit der Beschickung gegenüber den auf sie einwirkenden Kräften des strömenden Mediums so groß ist, dass die Beanspruchung der Beschickung durch das strömende Medium nicht zu einer unerwünschten Abrasion des Beschickungsmaterials führt;
(b) Aluminium-, Magnesium-, Mangan- und/oder Titan- Oxide bzw. (oxi)hydroxide, Fe(OH)₃, der deren Alterungs- und dehydrierte Folgeprodukte;
(c) Aktivkohle, Kalk, Ionenaustauscher, Zeolithe oder ähnliche Silicate, Katalysatoren;
(d) Kupfer- und/oder Zink- und/oder Silberverbindungen.

3. Verfahren nach Ansprüchen 1 bis 2, **dadurch gekennzeichnet, dass** mindestens eines der in Anspruch 2 genannten Produkte in eine wässrige Suspension von Eisenoxid und/oder Eisenoxihydroxid eingemischt werden, die Suspension gegebenenfalls nach einer Vortrocknung im halbfesten Zustand einer mechanischen Formgebung und anschließenden (weiteren) Trocknung unter Erlangung eines festen Zustandes unterzogen wird.

4. Verfahren nach Ansprüchen 1 bis 3, **dadurch gekennzeichnet, dass** die in Anspruch 2 aufgeführten Adsorbermedien gemahlen und als Pulver eingesetzt werden.

5. Verfahren nach Ansprüchen 1 bis 3, **dadurch gekennzeichnet, dass** die in Anspruch 2 aufgeführten Adsorbermedien als Granulate eingesetzt werden.

6. Verfahren nach Ansprüchen 1 bis 4, **dadurch gekennzeichnet, dass** die in Anspruch 2 aufgeführten Adsorbermedien zu einem einzelnen Block verpresst werden.

7. Verfahren nach Ansprüchen 1 bis 4, **dadurch gekennzeichnet, dass** die in Anspruch 2 aufgeführten Adsorbermedien zu Granulaten verarbeitet werden.

8. Verfahren nach Ansprüchen 1 bis 7, **dadurch gekennzeichnet, dass** die Mischungen zusätzlich mit Zusatzstoffen wie z. B. Bindemittel versetzt werden.

9. Verfahren nach Ansprüchen 1 bis 8, **dadurch gekennzeichnet, dass** als Zusatzstoffe Tonmehl, gebrannter Ton, Bentonite, thixotrope Bentonite, Gasbetonstaub, Perlite, Blähton, Kalksandsteinmehl, Trassmehl, Kalksteinmehl, Trasskalk, Bleicherde, Zement, Calciumaluminat, Natriumaluminat, Calciumsulfid, organische Sulfide, Calciumsulfit, Calciumsulfat, Wasser, kohlenstoffhaltige Sorptionsmittel, wie insbesondere Herdofenkoks, Aktivkohle, Flugaschen, ferner Wasserglas, Abbindebeschleuniger und/oder Abbindeverzögerer eingesetzt werden.

10. Verfahren nach Ansprüchen 1 bis 9, **dadurch gekennzeichnet, dass** die Mischungen in einen durchströmbaren Behälter eingebettet werden.

11. Verfahren nach Ansprüchen 1 bis 9, **dadurch gekennzeichnet, dass** die Mischungen in einem Filterbehältnis aus Kunststoff, Naturstoff, Keramik oder Metall eingebettet werden.

12. Verfahren nach Ansprüchen 1 bis 9, **dadurch gekennzeichnet, dass** die Mischungen in einer Kartusche eingebettet werden.

13. Verfahren nach Ansprüchen 1 bis 12, **dadurch gekennzeichnet, dass** die Adsorbermischungen zur Gewässerreinigung bzw. -aufbereitung eingesetzt werden.

14. Verfahren nach Ansprüchen 1 bis 12, **dadurch gekennzeichnet, dass** die Adsorbermischungen zur Gasreinigung eingesetzt werden.

15. Verwendung von gemäß Ansprüchen 1 bis 13 erhältlichen Adsorbermischungen zur Entfernung von Schwermetallen, sowie Phosphor-, Antimon-, Beryllium-, Selen-, Tellur- sowie Cyanoverbindungen und organischen Molekülen aus Wasser.

16. Verwendung von gemäß Ansprüchen 1 bis 13 erhältlichen Adsorbermischungen zur Entfernung von Arsenverbindungen aus Wasser.
